# EUROPEAN PATENT SPECIFICATION

(11) **EP 3 074 600 B1**
(45) Date of publication and mention of the grant of the patent: **02.03.2022**
(21) Application number: 14802077.9
(22) Date of filing: 24.11.2014
(51) Int. Cl.: F01D 5/14

(54) **BLADE ASSEMBLY ON BASIS OF A MODULAR STRUCTURE FOR A TURBOMACHINE**
SCHAUFELANORDNUNG AUF DER BASIS EINER MODULAREN STRUKTUR FÜR EINE TURBOMASCHINE
ENSEMBLE PALE SUR LA BASE D'UNE STRUCTURE MODULAIRE POUR UNE TURBOMACHINE

(30) Priority: 25.11.2013 EP 13194259
(43) Date of publication of application: 05.10.2016
(73) Proprietor: Ansaldo Energia IP UK Limited, London W1G 9DQ (GB)
(72) Inventor: FERBER, Joergen, 79793 Wutöschingen (DE); HOEVEL, Simone, CH-5426 Lengnau (CH); OPDERBECKE, Thomas, CH-5417 Untersiggenthal (CH); YAKUSHKOV, Dmitry, Moscow 107217 (RU); DROZDOV, Alexey, Velikie Luki 182100 (RU)
(74) Representative: Bernotti, Andrea
(86) International application number: PCT/EP2014/075422
(87) International publication number: WO 2015/075239

(56) References cited:
- EP-A2- 1 881 156
- EP-A2- 1 908 920
- US-A- 3 810 711
- US-A- 5 318 406
- US-A1- 2006 120 869
- US-A1- 2010 054 932
- US-B1- 8 162 617
- US-B1- 8 186 953

## Description

### Technical Field

The present invention relates to a blade assembly for a turbomachine, preferably a gas turbine engine, and basically refers to a modular rotor blade with one or more removable elements or modules. The term blade is to define in a broad sense and includes also stator vanes.

Basically, the modular blade assembly comprises various interchangeable modules or elements, wherein the mentioned parts are substitutable or non-substitutable.

### Background of the Invention

US 2011/268582 A1 discloses a blade, comprising a blade airfoil which extends in the longitudinal direction of the blade along a longitudinal axis. The blade airfoil, which is delimited by a leading edge and a trailing edge in the flow direction, merges into a shank at the lower end beneath a platform which forms the inner wall of the hot gas passage, the shank terminating in a customary blade root with a fir-tree-shaped cross-sectional profile by which the blade can be fastened on a blade carrier, especially on a rotor disk, by inserting into a corresponding axial slot (see, for example, Figure 1 of US 4,940,388).

It is notorious and state of the art that rotor blades are equipped with cooling passages which extend inside the blade airfoil for cooling the blade and are supplied with a cooling medium, particularly cooling air.

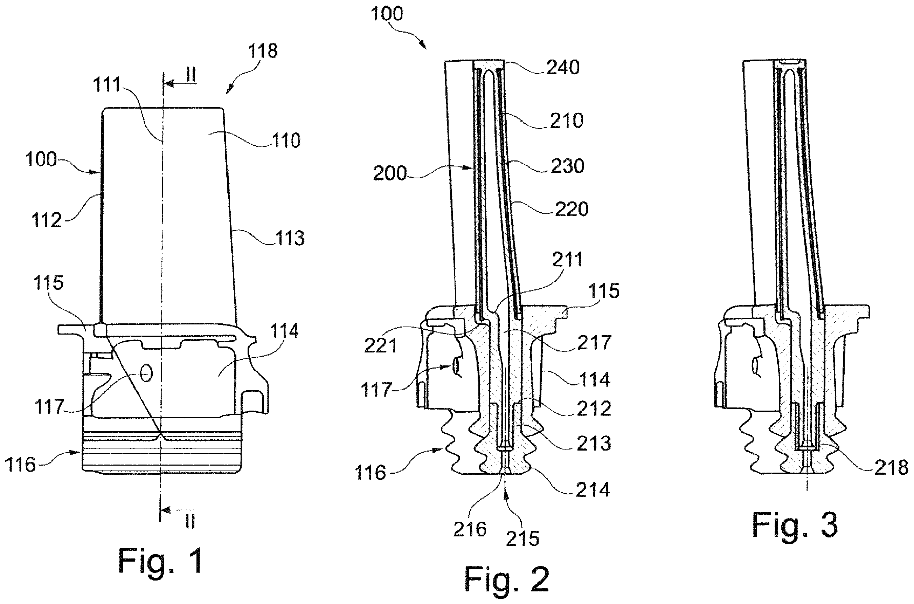

Referring to said US document, the cooling passages extend inside the blade airfoil for cooling the blade and are supplied with a cooling medium, particularly cooling air, via a feed hole which is arranged on the shank at the side. The shank, similar to the blade airfoil, has a concave and a convex side. The feed hole, which extends obliquely upwards into the interior of the blade airfoil, opens into the outside space on the convex side of the shank. In order to reduce the mechanical stresses which are associated with the mouth of the feed hole and at the same time to positively influence the vibration behavior of the blade, provision is made around the mouth of the feed hole for a planar stiffening element which reaches beyond the direct vicinity of the feed hole, which stiffening is formed integrally on the shank and consists of the same material as the blade. As is to be seen from the cross section of the stiffening element in Figure 3, the stiffening element is formed as a large-area plateau, and-from the opening of the feed hole arranged to the left of the center plane reaches far beyond the center plane of the blade so that the stiffening element is formed symmetrically to the center plane and also encompasses the mouth of the feed hole.

In US 2013/0089431 A1 a blade airfoil for a turbine system is disclosed. The blade airfoil includes a first body having exterior surfaces defining a first portion of an aerodynamic contour of the blade airfoil and formed from a first material. The blade airfoil further includes a second body having exterior surfaces defining a second portion of an aerodynamic contour of the blade airfoil, the second body coupled to the first body and formed from a second material having a different temperature capability than the first material. In another embodiment, a nozzle for a turbine section of a turbine system is disclosed. The nozzle includes a blade airfoil having exterior surfaces defining an aerodynamic contour, the aerodynamic contour comprising a pressure side and a suction side extending between a leading edge and a trailing edge. The blade airfoil includes a first body having exterior surfaces defining a first portion of the aerodynamic contour of the blade airfoil and formed from a first material. The blade airfoil further includes a second body having exterior surfaces defining a second portion of the aerodynamic contour of the blade airfoil, the second body coupled to the first body and formed from a second material having a different temperature capability than the first material. The accompanying drawings of this US document, especially Figures 3 through 6, together with description, illustrate embodiments and serve to explain the principles of this state of the art.

US 5,700,131 shows an internally cooled turbine blade for a gas turbine engine that is modified at the leading and trailing edges to include a dynamic cool air flowing radial passageway with an inlet at the root and a discharge at the tip feeding a plurality of radially spaced film cooling holes in the blade airfoil surface. Replenishment holes communicating with the serpentine passages radially spaced in the inner wall of the radial passage replenish the cooling air lost to the film cooling holes. The discharge orifice is sized to match the backflow margin to achieve a constant film-hole coverage throughout the radial length. Trip strips may be employed to augment the pressure drop distribution. Also well known by those skilled in this technology is that the engine's efficiency increases as the pressure ratio of the turbine increases and the weight of the turbine decreases. Needless to say, these parameters have limitations. Increasing the speed of the turbine also increases the blade airfoil loading and, of course, satisfactory operation of the turbine is to stay within given blade airfoil loadings. The blade airfoil loadings are governed by the cross sectional area of the turbine multiplied by the velocity of the tip of the turbine squared, or AN<2>. Obviously, the rotational speed of the turbine has a significant impact on the loadings. The spar/shell construction contemplated by this invention affords the turbine engine designer the option of reducing the amount of cooling air that is required in any given engine design. And in addition, allowing the designer to fabricate the shell from exotic high temperature materials that heretofore could not be cast or forged to define the surface profile of the blade airfoil section. In other words, by virtue of this invention, the shell can be made from Niobium or Molybdenum or their alloys, where the shape is formed by a well-known electric discharge process (EDM) or wire EDM process. In addition, because of the efficacious cooling scheme of this invention, the shell portion could be made from ceramics, or more conventional materials and still present an advantage to the designer because a lesser amount of cooling air would be required.

EP 2 642 076 shows a connecting system for metal components and CMC components, a turbine blade retaining system and rotating component retaining system are provided. The connecting system includes a retaining pin, a metal foam bushing, a first aperture disposed in the metal component, and a second aperture disposed in the ceramic matrix composite component. The first aperture and the second aperture are configured to form a through-hole when the metal component and the ceramic matrix composite component are engaged. The retaining pin and the metal foam bushing are operably arranged within the through-hole to connect the metal component and the ceramic matrix composite component.

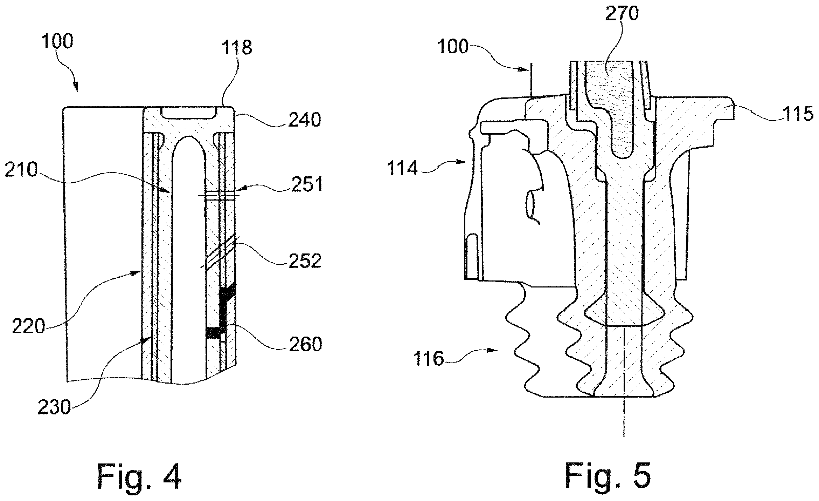

US 8,162,617 B1 relates to a turbine blade with a spar and shell construction in which the spar and the shell are both secured within two platform halves. The spar and the shell each include outwards extending ledges on the bottom ends that fit within grooves formed on the inner sides of the platform halves to secure the spar and the shell against radial movement when the two platform halves are joined. The shell is also secured to the spar by hooks extending from the shell that slide into grooves formed on the outer surface of the spar. The hooks form a serpentine flow cooling passage between the shell and the spar. The spar includes cooling holes on the lower end in the leading edge region to discharge cooling air supplied through the platform root and into the leading edge cooling channel. The spar 11 includes elbow shaped slots 21 that extend along the outer surface of the spar 11 from the top to the bottom, as shown in Figure 1 and Figure 5. The slots 21 are shaped and positioned to receive the hooks 22 extending from the shell 12 and secure the shell 12 to the spar 11 and minimize the flexing apart between the spar and shell. The wording "...minimize the flexing apart between the spar and shell" does not mean, that the hooks and the slots form a force-fit connection.

Additionally, shrinking joint or shrink-fitting is a technique in which an interference fit is achieved by a relative size change after assembly. This is usually achieved by heating or cooling one component before assembly and allowing it to return to the ambient temperature after assembly, employing the phenomenon of thermal expansion to make a joint. For example, the thermal expansion of a piece of a metallic drainpipe allows a builder to fit the cooler piece to it. As the adjoined pieces reach the same temperature, the joint becomes strained and stronger.

The turbine blade according to US 3,810,711 includes a hollow strut covered with a porous laminated material to provide a cooled blade portion and includes a supporting strut portion terminating in one or two bases for attachment to a turbine wheel. It also includes a blade platform bi-cast to the strut at the junction of the blade and supporting portions. The strut may be fabricated by casting or forging two parts, each defining one face of the strut, bonding these together at the leading edge of the airfoil, machining the leading edge portion, fitting the facing to the blade portion of the strut and bonding these together, then forming the blade portion to the desired airfoil contour and thereafter bi-casting the platform onto the strut so as to cover the platform end of the blade facing.

US 8 162 617 B1 discloses a modular blade assembly for a gas turbine that comprises a blade airfoil, a footboard mounting part and a heat shield. Interchangeable connection of the blade components is provided.

### Summary of the Invention

The present invention provides a blade assembly for a turbomachine with the features of claim 1.

The present invention has for its object to provide a structure or architecture of a blade of a turbomachine built from a plurality of interchangeable modules or elements optimized to the various operation regimes of the turbomachine, particularly a gas turbine.

The structure of the blade includes substantially a blade airfoil, an inner platform, a fir-tree-shaped cross-sectional profile by which the blade can be fastened on a blade carrier, e.g. a rotor disk, as main modules with additional sub-modules, especially an intermediate shank between the inner platform and the footboard mounting part, also called root, having a fir-tree-shaped cross-sectional profile. Accordingly, the inventive idea of the present invention leaves the use of typical blade structures, basically consisting of a blade airfoil, an inner platform and a footboard mounting part made in one piece as depicted and explained in connection with the state of the art.

Usually, the inner platform is an integral part of the blade. Due to that, during operation at elevated temperatures thermal stress is induced into the transition part from the blade airfoil to the inner platform of the rotor blade. This means that at the leading and trailing edges of the blade airfoil stress concentrations result which may lead to local failure of the material or at least increase the reconditioning effort.

Named stress concentration and local failure of the material can be avoided by decoupling the inner platform from the blade airfoil portion. In addition with decoupling these portions also different degration mechanism can be separated, like oxidation of the inner platform from the low cycle fatigue of the blade airfoil portion. By decoupling from each other, both have to carry themselves in corresponding carrier.

The outer hot gas path liner, also called outer shell, represents the aero profile and is an interchangeable module with variants in cooling and/or material configurations and/or corporal compounding adapted to the different operating regimes of the gas turbine engine respectively of a power plant.

However, it must be ensured that the inner platform and the heat shield of the rotor blade of the first row are aligned adjacent to each other in circumferential direction limiting an annular hot gas flow in the area of the entrance opening of the turbine stage.

The term "radial" as used herein, refers to the rotor axis of the turbomachine and the installed blade in its operational position.

Moreover, existing solutions according to the mentioned state of the art under section "Background of the Invention" cover only parts of the object of the present invention. One of the most important aspects of the invention is to provide at least one outer and, if necessary and according to individual operative requirements or different operating regimes, at least one intermediate shell that is not exposed to the e.g. hot gas flow of a gas turbine. The function of the blade airfoil carrier is to carry the mechanical load of the blade airfoil module. In order to protect the blade airfoil carrier with respect to the high temperature and separate thermal deformation of the blade airfoil module, an outer and, additionally, an intermediate shell can be applied.

Accordingly, the intermediate shell is in any case optional. It may be required as compensator for potentially different thermal expansion of outer shell and spar and/or cooling shirt for additional protection of the spar. The outer shell is joined to the optional intermediate shell or spar generally by interference fit, and the intermediate shell is also joined to the spar by interference fit.

The spar, including the tip cap, is manufactured by additive manufacturing methods and includes a cooling configuration which in addition to cool the spar itself may feed the outer shell and the optional intermediate shell with cooling media.

Furthermore, the intermediate shell provides additional protection to the spar in case of damage of the outer shell. Basically, the intermediate shell is an interchangeable module with variants in cooling and/or material configurations adapted to the different operating regimes of the turbomachine.

If several superimposed shells are provided, they can be built with or without spaces between them.

The mentioned shells can be made of at least two segments. Preferably, the components, forming the shell, are connected together so as to permit assembly and disassembly of the shell, shell components, blade airfoil and various components of the blade.

In principle, the complete shell includes a leading edge and a trailing edge in conformity with the structure and the aero profile of the blade airfoil.

The advantages achieved by the invention, especially referring to an outer shell, particularly consist in the fact that it is possible to use standardized components and in a particularly simple way to produce blades that are individually and specifically matched to locally varying conditions of use resp. adapted to the different operating regimes of the gas turbine engine respectively of the power plant.

Even with a blade airfoil that is of standardized design, by suitably selecting geometry and positioning of the flow-applied element in relation to the blade airfoil, it is possible to compensate or reduce local differences in flow impact onto the individual blades. As a result the flow impact in a particular blade row becomes aerodynamically more homogenous. It is in this way possible, inter alia, to reduce the excitation of oscillations in the rotor blade region. Such use of adding flow-applied parts to adapt the blade airfoil of a standard rotor blade to different conditions of use can in particular replace the production and holding in stock of different, geometrically similar components, namely a large number of complete blades that are individually adapted to the particular conditions of use of the turbomachine.

In the event of damage to the flow-charged outer shell, repair involves the replacement of only the damaged subcomponents as opposed to the entire blade airfoil. The modular design facilitates the use of various materials in the shell, including materials that are dissimilar. Thus, suitable materials can be selected within the shell components to optimize component life, cooling air usage, aerodynamic performance, and cost.

The flow-charged shell assembly can further include a seal provided between a recess and at least one of the radial ending of the shell and the outer peripheral surface of the blade airfoil close to its radial end. As a result, hot gas infiltration or cooling air leakage, except when an effusion cooling is provided, can be excluded, if the shell segments can be brazed or welded along their radial interface at or near the outer peripheral surface so as to close the gaps. Alternatively, the gaps can be filled with a compliant insert or other seal (rope seal, tongue and groove seal, sliding dovetail, etc.) to prevent hot gas ingress and migration through the gaps. In all cases, the interchangeability of the single shell or shell components is to be maintained.

The gap or groove of the radial interface of the single shell components can be filled with a ceramic rope, and/or a cement mixture can be used. An alternative consists in a shrinking shell or shrinking shell components on the blade airfoil. If in such a case the interchangeability of the shell or shell components is not guaranteed, it must be ensured that the entire blade airfoil arrangement can be replaced.

Both, the inner platform and the heat shield can be formed similar to the blade airfoil.

Especially the mentioned inner platform can be made of at least two segments. Preferably, the components forming the inner platform are connected together or to the blade airfoil and/or shell components so as to permit assembly and disassembly of this inner platform.

If the blade airfoil is internally cooled with a cooling medium at a higher pressure than the hot combustion gases, excessive cooling medium leakage into the hot gas path can occur. To minimize such concerns, one or more additional seals can be provided in connection with the shell arrangement. The seals can be at least one of rope seals, W-shaped seals, C-shaped seals, E-shaped seals, a flat plate, and labyrinth seals. The seals can be made of various materials including, for example, metals and ceramics.

Additionally, a thermal insulating material or a thermal barrier coating (TBC) can be applied to various portions of the rotor blade assembly.

The main advantages and features of the present invention are as follows:
- Thermo-mechanical decoupling of modules improves part lifetime compared to integral design.
- Modules with different variants in cooling and/or material configuration can be selected to best fit to the different operating regimes of the turbomachine.
- It is possible to introduce an inner spar which extends from the root of the blade to the tip of the blade airfoil and can be secured to the attachment at the root by various connection means.
- The blade airfoil comprises a single outer shell or additional intermediate shell components which can be selected in a manner to optimize component life, cooling usage, aerodynamic performance, and to increase the capability of resistance against high temperature stresses and thermal deformation.
- The shells are segmented in various arrangements, wherein the individual part can be made of appropriate materials.
- The spar having various passageways to supply a cooling medium through the blade.
- The cooling of all above mentioned elements/modules of the blade mainly consists of a convective cooling, with selected impingement and/or effusion cooling sections.
- The interchangeability of all elements/modules to each other is given as a matter of principle.
- The fixation of the various elements/modules to one another can be made by means of a friction-locked actuated by adherence or through the use of a metallic and/or ceramic surface coating.
- The modular design of the blade airfoil facilitates the use of various materials in the shell, including materials that are dissimilar, in accordance with the different operating regimes of the turbomachine.
- The modular blade assembly consists of replaceable and non-replaceable elements.
- The blade airfoil has a pronounced or swirled aerodynamic profile in radial direction, is cast, machined or forged comprising additionally additive features with internal local web structure for cooling or stiffness improvements. Furthermore, the blade airfoil may be coated and comprise flexible cooling configurations for adjustment to operation requirements, such as base-load, peak-mode, partial load of the turbomachine.
- If the blade airfoil is provided with an outer platform on the side of stator, this element is cast, forged or manufactured in metal sheet or plate. The outer platform is consumable in relation of predetermined cycles and replaced frequently as specified maintenance period and may be mechanically decoupled from the blade airfoil, wherein the outer platform may additionally be mechanically connected to rotor blade airfoil using force closure elements, namely bolts. The outer platform may be coated with CMC or ceramic materials.
- The spar as sub-structure of the flow-charged blade airfoil or the shell assembly is interchangeable, pre-fabricated, single or multi-piece, uncooled or cooled, using a convective and/or film and/or effusion and/or impingement cooling structure.
- The outer shell and additional intermediate shells are interchangeable, consumable, pre-fabricated, single or multi-piece with radial or circumferential patches and using a shrinking joint to the sub-structure.

The foregoing and other features of the present invention will become more apparent from the following description and accompanying figures.

### Brief Description of the Figures

The invention shall subsequently be explained in more detail based on exemplary embodiments in conjunction with the drawing. In the drawing:
- Fig. 1: shows an exemplary rotor blade for a gas turbine, which is not part of the invention;
- Fig. 2: shows a longitudinal section through the rotor blade, which is not part of the invention;
- Fig. 3: shows a further longitudinal section through the rotor blade, which is not part of the invention;
- Fig. 4: shows a partial longitudinal section through the upper end of the rotor blade airfoil, which is not part of the invention;
- Fig. 5: shows a partial longitudinal section through the root of the rotor blade, which is not part of the invention;
- Fig. 6: shows a cross section through the rotor blade airfoil, which is not part of the invention;
- Fig. 7: shows a platform with inserts or mechanical interlocks optionally sealed by HT ceramics, which is not part of the invention;
- Fig. 8: shows a joining technology in the range of the tip of the rotor blade airfoil, which is not part of the invention;
- Fig. 9: shows a further joining technology in the range of the tip of the rotor blade airfoil, which is not part of the invention;
- Fig. 10 a, b, c: shows a rotor blade which is composed of various elements and materials at different views according to the invention;
- Fig. 11 a, b: shows a longitudinal section through the rotor blade airfoil at different views according to the invention;
- Fig. 12: shows a root portion with a fir-tree-shaped profile, which is not part of the invention.

### Detailed Description of Exemplary Embodiments

In Figure 1 a rotor blade 100 is reproduced which is not covered by the invention. The rotor blade 100 comprises a blade airfoil 110 which extends in the longitudinal direction of the rotor blade along a longitudinal axis 111. The blade airfoil 110, which is delimited by a leading edge 112 and a trailing edge 113 in the flow direction, merges into a shank 114 at the lower end beneath an inner platform 115 which forms the inner wall of the hot gas passage, the shank is terminating in a customary blade root 116 with a fir tree profile by which the blade 100 can be fastened on a blade carrier, especially on a rotor disk, by inserting it into a corresponding axial slot.

The inner platform abuts the platforms of neighboring blades and defines a gas passage inner wall for the turbine. A row of outer not shown heat shields at the tip of the blade airfoil 118 defines the outer wall of the hot gas path of the gas turbine.

Cooling passages, which are not shown, extend inside the blade airfoil 110 for cooling the rotor blade 100 and are supplied with a cooling medium, particularly cooling air, via a feed hole 117 which is arranged on the shank 114 at the side (see Figure 2). The shank 114, similar to the blade airfoil 110, has a concave and a convex side. In Figure 1 the convex side faces the viewer. The feed hole 117, which extends obliquely upwards into the interior of the blade airfoil 110, opens into the outside space on the convex side of the shank 114.

Figure 2 shows a section taken from sectional lines II-II of Figure 1. The airfoil of the rotor blade 100, generally illustrated as reference numeral 200, comprises an outer shell assembly 220, 230 and a generally elliptically shaped spar 210. The spar 210 extending longitudinally or in the radial direction from a root portion 116 to a tip 240 with a downwardly extending first portion 211 and a second portion 212 that fair into a rectangular shaped projection 213 that is adapted to fit into an attachment 214 which is anchored in a final complementary portion 214 with the same outer contour compared to the fir-tree-shaped cross-sectional profile 116.

The shank 114 may be formed with the inner platform 115 or the platform 115 may be formed separately and joined thereto and projects in a circumferential direction to abut against the inner platform in the adjacent rotor blade in the turbine disk (not shown). A seal (not shown) may be mounted between platforms of adjacent rotor blades to minimize or eliminate leakage around the individual rotor blades.

The tip 118 of the rotor blade 100 may be formed integrally with the spar 210 or may be a separate piece that is suitably joined to the top end of the spar 210. The outer shell 220 extends over the surface of the spar 210 and ends in the central portion 221 spaced from the outer surface of the spar 210.

The outer shell 220 defines a pressure side, a suction side, a leading edge 112 and a trailing edge 113 (see Figure 1). As mentioned above, the outer shell 220 may be made from different materials depending on the different operating regimes of the gas turbine engine. The outer shell 220 can be made in a single unit or consist of various parts, divided along the longitudinal axis 111 (see Figure 1), similar to the spar 210.

As shown in Figure 2, the cooling air 215 is additionally (see numeral 117) admitted through an inlet 216, the central opening formed at the ingress in the final complementary portion 214 and, subsequently, in the spar 210, and flows in a straight passage or interior cavity 217 in radial or quasi-radial direction.

According to Figure 2 an intermediate shell 230 may be introduced. The intermediate shell 230 constitutes one of the important features of the rotor blade. It may be required as compensator for potentially different thermal expansion of outer shell 220 and spar 210 and/or cooling shirt for additional protection of the spar. The outer shell 220 is joined to the intermediate shell 230 or generally to the spar 210 by interference fit, wherein the intermediate shell 230 is also joined to the spar by interference fit.

Furthermore, the intermediate shell 230 provides additional protection to the spar 210 in case of damage of the outer shell 220. Basically, the intermediate shell 230 is an interchangeable module with variants in cooling and/or material configurations adapted to the different operating regimes of the gas turbine engine. If several superimposed shells are provided, they may be built with or without spaces between each other.

The internal cooling of the shells may be individually provided, or the cooling being operatively connected with the inner cooling of the blade airfoil.

Figure 3 shows a further section taken from sectional lines II-II of Figure 1. The distinguishing feature with respect to Figure 2 is that an additional retaining sleeve 218 is introduced in the rectangular shaped projection 213.

Fig. 4 shows a partial longitudinal section through the upper end of the blade airfoil. The tip 118 of the rotor blade 100 may be sealed by a 240 that may be formed integrally with the spar 210, or may be a separate piece that is suitably joined to the top end of the spar 210. The outer shell 220 extends over the surface of the spar 210. According to Figure 4 an intermediate shell 230 may be introduced. The intermediate shell 230 constitutes one of the important features of the rotor blade. It may be required as compensator for potentially different thermal expansion of outer shell 220 and spar 210 and/or cooling shirt for additional protection of the spar. The outer shell 220 is joined to the intermediate shell 230 or generally to the spar 210 by interference fit, wherein the intermediate shell 230 is also joined to the spar by interference fit. Additionally, Figure 4 shows different configurations of cooling holes 251, 252 through the elements of the rotor blade airfoil in partial or integral manner. Furthermore, Figure 4 shows a feeding cavity 260 in the intermediate shell 230. The spar 210 and the various shells 220, 230 are provided in the flow and peripheral directions with a number of regularly or irregularly distributed cooling holes 251, 252 having the most varied cross-sections and directions compared to the flow direction of the cooling medium. Through the cooling holes a cooling medium quantity flows outside of the rotor blade, and an increase in the velocity is induced along the surface of the rotor blade.

Figure 5 shows a partial longitudinal section through the root of the rotor blade. The interior cavity of the rotor blade airfoil (see Figure 2, item 217) is integrally or partially filled with an appropriate material 270 which can exert various functions.

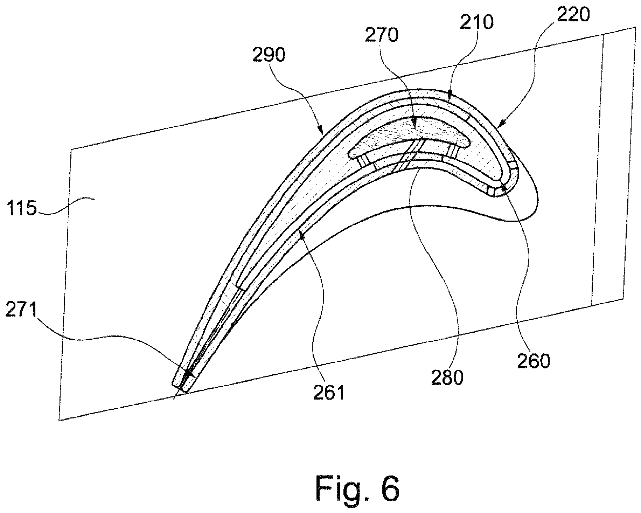

Figure 6 shows a cross section through the rotor blade airfoil, comprising an inner platform 115, a pressure side 280, a suction side 290, an outer shell 220, a spar 210, a filling material 270 (see Figure 5), feeding cavities 260, 261, a rib 271 situated in the region of the trailing edge of the rotor blade airfoil.

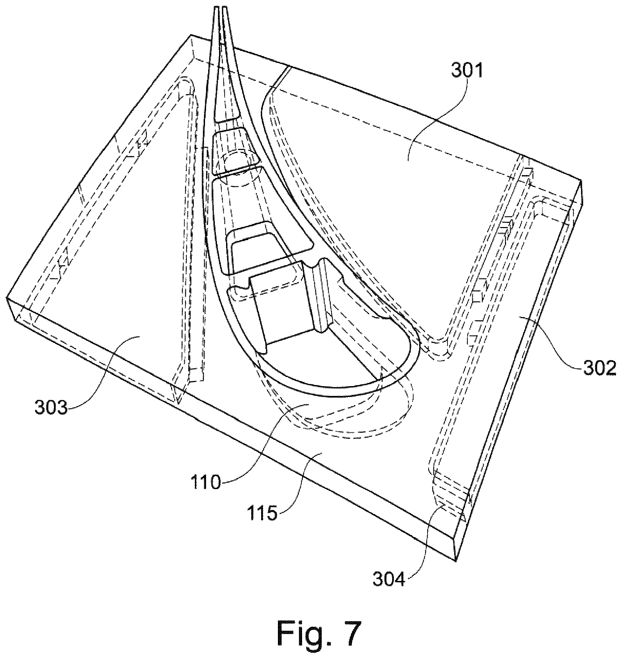

Fig. 7 shows a platform 115 of a rotor blade assembly with inserts and/or mechanical interlocks 301 - 303 optionally sealed by HT ceramics which is not part of the present invention. This arrangement may involve an inner and/or outer platform, and/or airfoil, and/or outer hot gas path liner, and be disposed along or within the thermal stress areas, namely the flow-charged zone of the rotor blade. The insert element and/or mechanical interlock forming the respective flow-charged zone are inserted at least in a force-fitting manner into appropriately designed recesses or in the manner of a push loading drawer with additional fixing means 304. Additionally, the insert element and/or mechanical interlock may be sealed by HT ceramics.

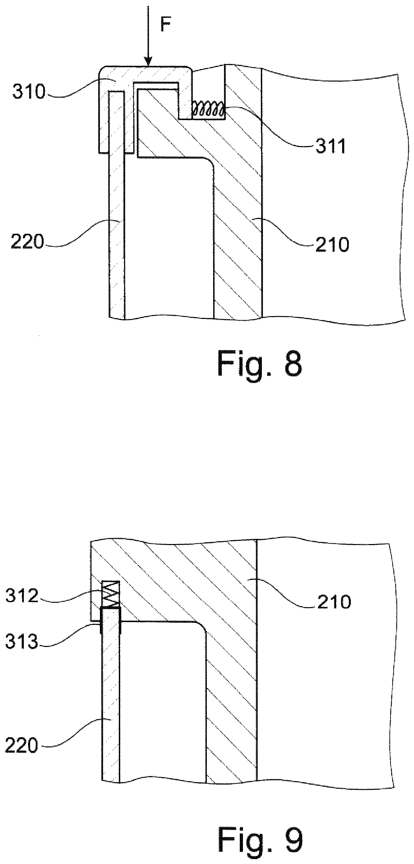

Figure 8 shows a joining technology in the range of the tip of the rotor blade airfoil which is not covered by the present invention.

Specifically, Figure 8 shows the connection between the spar 210 and the outer shell 220. The mentioned elements 210, 220 are assembled with the aid of a force F acting metallic clamp 310 in axial direction. A spring 311 results actively connected to the metallic clamp 310 and the spar 210, and indirectly to the outer shell 220.

Fig. 9 shows a further joining technology in the range of the tip of the rotor blade which is not part of the present invention. The assembly in connection with the outer shell 401 with respect to the spar 600 comprises a spring 312 and a metallic cover element 313.

Important aspects of the shown joining in connection with Figures 8 and 9 are as follows: CMC or metallic outer shell is necessary to protect the sensitive metallic spar. To avoid point mechanical load, especially on the CMC, reduces the risk of failure. The CMC or metallic outer shell may be fixed by brazing, soldering or using HT ceramic adhesives. The concept involves an interference fit with ceramic bush an compensator (spring) and fixation of CMC or metallic shell with metallic clamp and spring (Figure 8) or by spring and metallic cover (Figure 9).

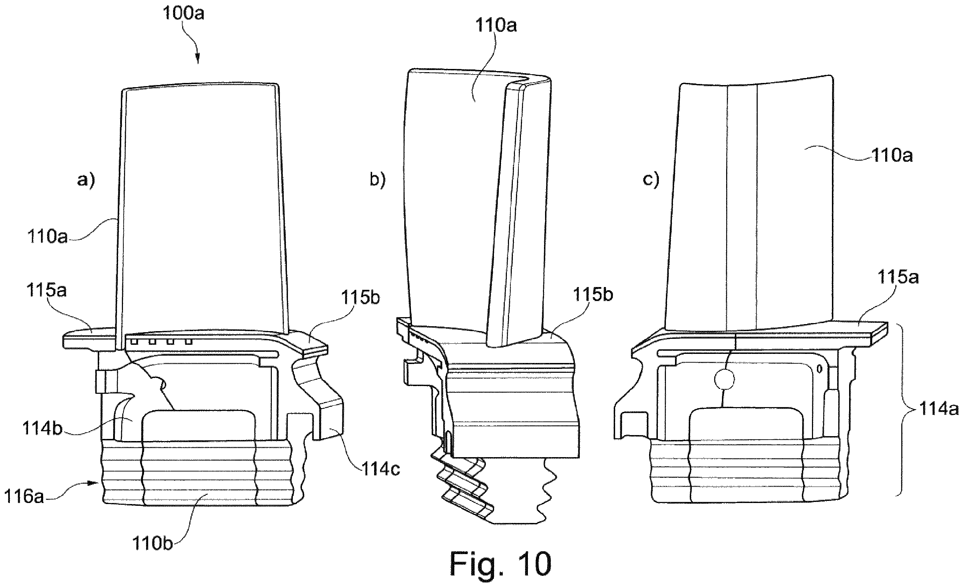

Figure 10 a-c shows a rotor blade 100a according to an exemplary embodiment of the invention. The rotor blade 100a comprises a blade airfoil 110a which extends in the longitudinal direction of the rotor blade along a longitudinal axis of the airfoil (see Figure 1). The blade airfoil 110a, which is delimited by a leading edge and a trailing edge in the flow direction (see Figure 1), merges into a shank 114a at the lower end beneath an inner platform 115a and 115b which forms the inner wall of the hot gas passage. The shank 114a consists of two parts 114b and 114c which can be assembled from the side and which clamp the elongation 110b of the airfoil 110a. Accordingly, the blade root 116a is composed of three parts 114b, 114c, 110b, which, assembled together, form a coherent fir-tree-shaped profile

The flow-charged surfaces of the individual parts 115a and 115b of the inner platform possess either a special thermal coating, or they are fitted with inserts which act against the thermal stress.

Additionally, the configuration of the blades, as shown in Figures c-d, is evident to a person skilled in the art.

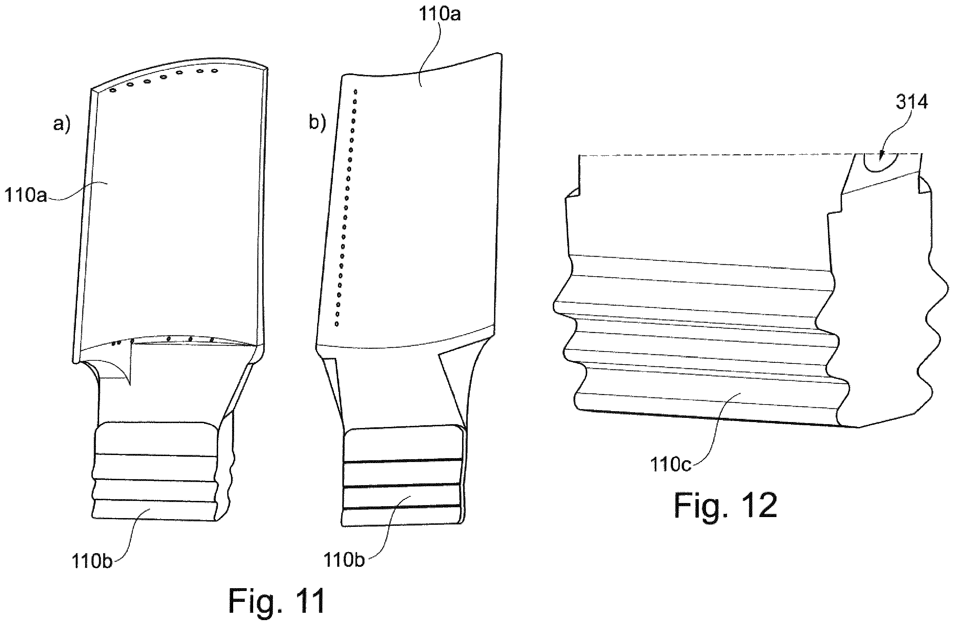

Figure 11 a, b shows an airfoil 110a having a pressure side and a suction side and a sub-structure, consisting - in radial direction of the airfoil - of an elongated and relatively slim formed portion 110b. The elongated portion 110b extends over the entire height of the footboard mounting part. The essential part of the elongated portion 110b consists of a fir tree profile, which is actively connected to the fir tree profile of the adjacent shank parts 114b and 114c according to Figures 10 a-c.

Finally, Figure 12 shows the fir tree profile 110c, which is available as an individual part and having a groove 314 which is used to hold the upper part of the airfoil and which is not part of the present invention.

### List of References Numerous

- 100: Rotor blade
- 100a: A further rotor blade
- 110: Rotor blade airfoil
- 110a: Rotor blade airfoil
- 110b: Fir-tree-shaped profile
- 111: Longitudinal axis
- 112: Leading edge of the blade airfoil
- 113: Trailing edge of the blade airfoil
- 114: Shank
- 114a: Composable shank
- 114b: Shank part
- 114c: Shank part
- 115: Inner platform
- 115a: Inner platform part
- 115b: Inner platform part
- 116: Blade root, root portion
- 116a: Fir-tree-shaped root portion
- 117: Feed hole
- 118: Tip of the blade airfoil
- 200: Embodiments of the rotor blade
- 210: Spar
- 211: Downwardly extending first portion
- 212: Downwardly extending second portion
- 213: Rectangular shaped portion
- 214: Final complementary portion
- 215: Cooling air or cooling medium
- 216: Inlet
- 217: Interior cavity
- 218: Retaining sleeve
- 220: Outer shell
- 221: Central portion
- 230: Intermediate shell
- 240: Tip
- 251: Cooling holes
- 252: Cooling holes
- 260: Feeding cavity
- 261: Feeding cavity
- 262: Feeding cavity
- 270: Filling material
- 271: Rib
- 280: Pressure side
- 290: Suction side
- 301: Insert, mechanical interlock
- 302: Insert, mechanical interlock
- 303: Insert, mechanical interlock
- 305: Fixing means
- 310: Metallic clamp
- 311: Spring
- 312: Spring
- 313: Cover element
- 314: Groove

## Claims

1. A blade assembly for a turbomachine on the basis of a modular structure,
wherein the blade elements comprise at least a blade airfoil and a footboard mounting part, wherein the elements have at its one ending means for the purpose of an interchangeable connection among each other, wherein the connection of the airfoil with respect to other element is based on a fixation in radial or quasi-radial extension compared to the rotor axis of the turbomachine, wherein at least the blade airfoil comprises at least one flow-charged outer hot gas path liner which encases at least one part of a basic sub-structure of the blade airfoil,
wherein the blade airfoil (110a), which is delimited by a leading edge and a trailing edge in the flow direction, merges into a shank (114a) at the lower end beneath an inner platform (115a, 115b),
**characterized in that** the shank (114a) consists of two parts (114b, 114c) which can be assembled from the side and which clamp an elongation (110b) of the blade airfoil (110a), accordingly, the footboard mounting part (116a) is composed of the two parts of the shank (114b, 114c) and the elongation (110b) of the blade airfoil (110a), which, assembled together, form together a coherent fir-tree-shaped profile.

2. The blade assembly according to claim 1, **characterized in that** the basic sub-structure of the blade airfoil (110a) consists of a spar which extends from the footboard mounting part of the rotor blade to the tip (118) of the blade airfoil (110a).

3. The blade assembly according to one of the claims 1 to 2 **characterized in that** a first flow-charged outer hot gas path liner has on the inside a second non flow-charged or partially flow-charged outer hot gas path liner.

4. The blade assembly according to one of the claims 1 to 3, **characterized in that** at least the first flow-charged outer hot gas path liner integrally encases the outer contour of the blade airfoil (110a), wherein the first outer hot gas path liner comprises at least two bodies forming completely or partially the outer contour of the blade airfoil (110a).

5. The blade assembly according to claim 4, **characterized in that** the bodies, completely or partially forming the outer hot gas path liner, are brazed or welded along their radial interface.

6. The blade assembly according to one of the claims 1 to 5, **characterized in that** the inner platform comprises at least one additional thermal barrier coating along thermal stress areas.

7. The blade assembly according to one of the claims 1 to 6, **characterized in that** an internal cooling path of the blade airfoil (110a) is actively connected to a cooling structure of the first flow-charged outer hot gas path liner, second flow-charged outer hot gas path liner and/or inner platform.

## Patentansprüche

1. Schaufelanordnung für eine Turbomaschine auf der Basis einer modularen Struktur, wobei die Schaufelelemente mindestens ein Schaufelblatt und einen Fußplattenmontageteil umfassen, wobei die Elemente an ihrem einen Ende Mittel zum Zweck einer austauschbaren Verbindung untereinander haben, wobei die Verbindung des Schaufelblatts in Bezug auf das andere Element auf einer Befestigung in radialer oder quasiradialer Ausdehnung im Vergleich zu der Rotorachse der Turbomaschine basiert, wobei mindestens das Schaufelblatt mindestens eine strömungsbeaufschlagte äußere Heißgaspfadverkleidung hat, die mindestens einen Teil einer Basis-Unterstruktur des Schaufelblatts umschließt,
wobei das Schaufelblatt (110a), das durch eine Vorderkante und eine Hinterkante in Strömungsrichtung begrenzt ist, in einen Schaft (114a) an dem unteren Ende unterhalb einer inneren Plattform (115a, 115b) übergeht,
**dadurch gekennzeichnet, dass** der Schaft (114a) aus zwei Teilen (114b, 114c) besteht, die von der Seite zusammengebaut werden können und die eine Verlängerung (110b) des Schaufelblatts (110a) festklemmen, und entsprechend der Fußplattenmontageteil (116a) aus den zwei Teilen des Schafts (114b, 114c) und der Verlängerung (110b) des Schaufelblatts (110a) zusammengesetzt ist, welche im zusammengebauten Zustand gemeinsam ein zusammenhängendes tannenbaumförmiges Profil bilden.

2. Schaufelanordnung nach Anspruch 1, **dadurch gekennzeichnet, dass** die Basis-Unterstruktur des Schaufelblatts (110a) aus einer Strebe besteht, die sich von dem Fußplattenmontageteil des Rotorblatts bis zur Spitze (118) des Schaufelblatts (110a) erstreckt.

3. Schaufelanordnung nach einem der Ansprüche 1 bis 2, **dadurch gekennzeichnet, dass** eine erste strömungsbeaufschlagte äußere Heißgaspfadverkleidung an der Innenseite eine zweite, nicht strömungsbeaufschlagte oder teilweise strömungsbeaufschlagte äußere Heißgaspfadverkleidung hat.

4. Schaufelanordnung nach einem der Ansprüche 1 bis 3, **dadurch gekennzeichnet, dass** mindestens die erste strömungsbeaufschlagte äußere Heißgaspfadverkleidung einstückig die äußere Kontur des Schaufelblatts (110a) umschließt, wobei die erste äußere Heißgaspfadverkleidung mindestens zwei Körper umfasst, die vollständig oder teilweise die äußere Kontur des Schaufelblatts (110a) bilden.

5. Schaufelanordnung nach Anspruch 4, **dadurch gekennzeichnet, dass** die Körper, die vollständig oder teilweise die äußere Heißgaspfadverkleidung bilden, entlang ihrer radialen Grenzfläche hartverlötet oder verschweißt sind.

6. Schaufelanordnung nach einem der Ansprüche 1 bis 5, **dadurch gekennzeichnet, dass** die innere Plattform mindestens eine zusätzliche thermische Sperrbeschichtung entlang thermisch belasteten Gebieten umfasst.

7. Schaufelanordnung nach einem der Ansprüche 1 bis 6, **dadurch gekennzeichnet, dass** ein innerer Kühlpfad des Schaufelblatts (110a) aktiv mit einer Kühlstruktur der ersten strömungsbeaufschlagten äußeren Heißgaspfadverkleidung, der zweiten strömungsbeaufschlagten äußeren Heißgaspfadverkleidung und/oder der inneren Plattform verbunden ist.

## Revendications

1. Aube d'assemblage pour une turbomachine sur la base d'une structure modulaire, dans laquelle les éléments d'aube comprennent au moins un profil d'aube et une partie de montage de marchepied, dans lequel les éléments présentent à une extrémité des moyens permettant une liaison interchangeable entre eux, dans lequel la liaison du profil par rapport aux autres éléments est basée sur une fixation dans une extension radiale ou quasi radiale par rapport à l'axe du rotor de la turbomachine, dans lequel au moins le profil d'aube comprend au moins un revêtement de trajet de gaz chaud extérieur chargé par écoulement qui enveloppe au moins une partie d'une sous-structure de base du profil d'aube,
dans lequel le profil d'aube (110a), qui est délimité par un bord d'attaque et un bord de fuite dans la direction de l'écoulement, se fond dans une queue (114a) à l'extrémité inférieure sous une plate-forme intérieure (115a, 115b),
**caractérisé en ce que** la queue (114a) est constituée de deux parties (114b, 114c) qui peuvent être assemblées par le côté et qui serrent un allongement (110b) du profil d'aube (110a), la partie de montage de marchepied (116a) étant donc composée des deux parties de la queue (114b, 114c) et de l'allongement (110b) du profil d'aube (110a), qui, assemblés ensemble, forment ensemble un profil cohérent en forme de sapin.

2. Aube d'assemblage selon la revendication 1, **caractérisée en ce que** la sous-structure de base du profil d'aube (110a) consiste en un longeron qui s'étend de la partie de montage de marchepied de l'aube de rotor à l'extrémité (118) du profil d'aube (110a).

3. Aube d'assemblage selon l'une des revendications 1 à 2, **caractérisée en ce qu'**un premier revêtement de trajet de gaz chaud extérieur chargé par écoulement comporte à l'intérieur un second revêtement de trajet de gaz chaud extérieur non chargé ou partiellement chargé par écoulement.

4. Aube d'assemblage selon l'une des revendications 1 à 3, **caractérisée en ce qu'**au moins le premier revêtement de trajet de gaz chaud extérieur chargé par écoulement enveloppe intégralement le contour extérieur du profil d'aube (110a), dans lequel le premier revêtement de trajet de gaz chaud extérieur comprend au moins deux corps formant complètement ou partiellement le contour extérieur du profil d'aube (110a).

5. Aube d'assemblage selon la revendication 4, **caractérisée en ce que** les corps, formant complètement ou partiellement le revêtement de trajet de gaz chaud extérieur, sont brasés ou soudés le long de leur interface radiale.

6. Aube d'assemblage selon l'une des revendications 1 à 5, **caractérisée en ce que** la plate-forme intérieure comprend au moins un revêtement supplémentaire d'isolation thermique le long des zones de contrainte thermique.

7. Aube d'assemblage selon l'une des revendications 1 à 6, **caractérisée en ce qu'**un trajet de refroidissement interne du profil d'aube (110a) est relié de manière active à une structure de refroidissement du premier revêtement de trajet de gaz chaud extérieur chargé par écoulement, du second revêtement de trajet de gaz chaud extérieur chargé par écoulement et/ou de la plate-forme intérieure.
